Europäisches Patentamt

European Patent Office

Office européen des brevets

(19)

(11) Publication number: **0 144 470**
**B1**

(12)                    **EUROPEAN PATENT SPECIFICATION**

(45) Date of publication of patent specification: **13.04.88**

(51) Int. Cl.⁴: **A 47 L 9/20, B 01 D 46/04**

(21) Application number: **83306735.8**

(22) Date of filing: **04.11.83**

(54) **Vacuum cleaners.**

(43) Date of publication of application:
**19.06.85 Bulletin 85/25**

(45) Publication of the grant of the patent:
**13.04.88 Bulletin 88/15**

(84) Designated Contracting States:
**BE CH DE FR GB IT LI NL**

(56) References cited:
**DE-A-3 016 641**
**DE-C- 179 544**
**FR-A-1 014 663**
**US-A-3 841 067**

(73) Proprietor: **KABUSHIKI KAISHA SUIDEN**
**4-23 Karasugatsuji 1-chome**
**Tennojiku Osakashi (JP)**

(72) Inventor: **Nakamura, Katsutoshi**
**51 Yuhigaoka**
**Sangocho Ikomagun Naraken (JP)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to vacuum cleaners.

Vacuum cleaners are known and widely used for house, factory and office cleaning. Vacuum cleaners are provided with filters which sieve out dust and dirt sucked up by the cleaner. The filter is conventionally in the form of a bag, commonly called a filter bag. However, it is difficult to sieve out the dust and dirt by means of such a filter bag, and unsieved impurities often pass through the filter meshes into the motor housing where they stick to greasy or oily surfaces of the motor components. Eventually, the build-up of the impurities may cause choking of the motor, and at least reduces its efficiency. Choking of the motor often leads to seizure, and shortens the life of the motor. In addition, the filter elements are also liable to blockage.

US—A—3841067 describes an electric vacuum cleaner comprising a main body including a suction port and an exhaust port and having an electrically operated blower disposed therein, filter means disposed in said main body to filter out dust particles contained in a stream of air sucked into the main body during operation of the blower, the filter means including a filter drum closed at one end and open at the other communicating with the blower and produced by folding a fine filter sheet of fibrous material into continuous waves and shaping the corrugated filter into a hollow, generally circular cylinder, wherein dusting means are disposed within the interior of the filter drum to vibrate the filter and remove dust particles adhering to the filtration surface. In the cleaners specifically described in US—A—3841067 it is necessary to open-up the devices in order to operate the dusting means.

According to the present invention there is provided a vacuum cleaner comprising a dust chamber for collecting sucked-up dust, dirt and/or moisture; a suction chamber located above the dust chamber; the suction chamber including an air inlet through which, in use, external air is sucked in under reduced pressure via the dust chamber; means for causing a suction pressure in the suction chamber; at least one first filter element located between the dust chamber and the suction chamber; a plurality of secondary filter elements suspended from an upper wall of the suction chamber, the secondary filter elements being radially arranged around a rotary shaft supported axially of the suction chamber; patting means fixed to the rotary shaft for causing dust and dirt entrained in the secondary filter elements to fall off by vibration said patting means comprising a single patting arm; and driving means for rotating the rotary shaft alternatively in clockwise and anti-clockwise directions; characterised in that the patting means comprises a plurality of vanes fixed to the rotary shaft and the single patting arm extending horizontally therefrom; and the driving means comprises a tube on one of the patting vanes and a string passing through the tube, the string including a grip ball at each end thereof and passing around the patting vanes.

A preferred embodiment of the present invention described hereinbelow is directed toward solving or at least alleviating the problems pointed out above, and provides a vacuum cleaner having a dual filter structure which is provided with a dust removing means, whereby a motor of the cleaner is protected against the effects of dust over a long period of use. One filter unit of the dual filter structure may be subjected to regular vibration, thereby protecting it against blockage due to dust entrained thereon.

The invention will now be further described, by way of illustrative and non-limiting example, with reference to the accompanying drawings, in which:

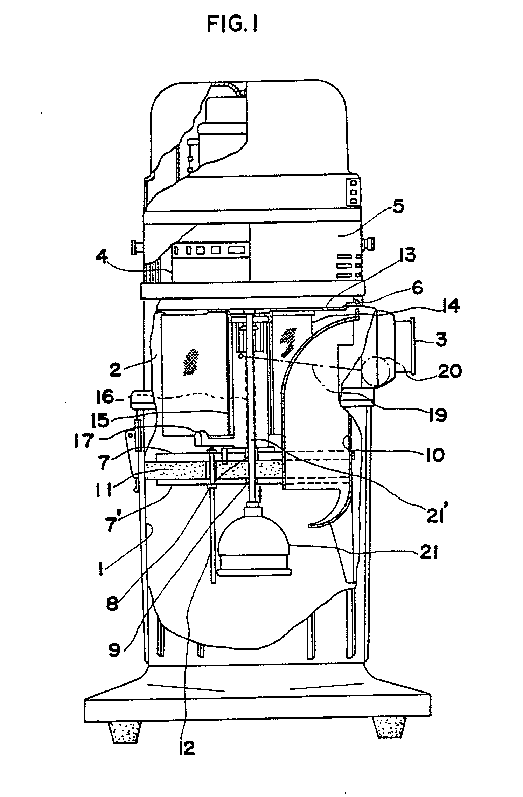

Figure 1 is a vertical cross-section through a vacuum cleaner embodying the present invention;

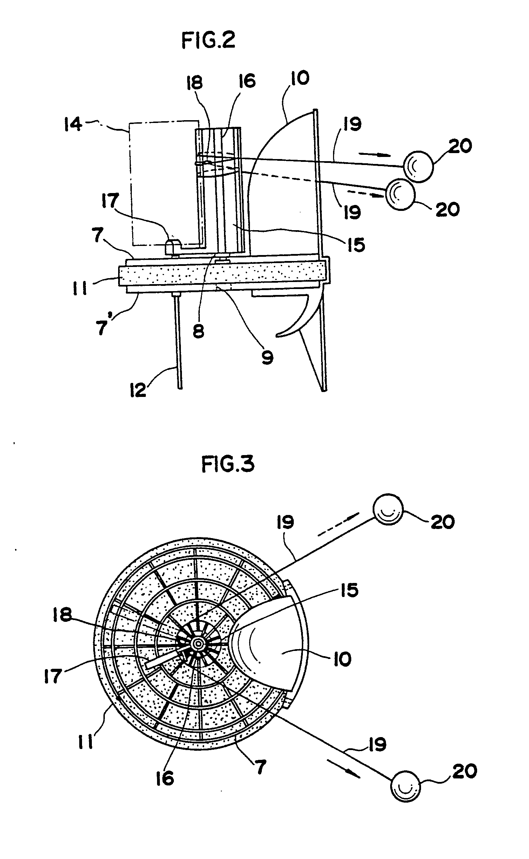

Figure 2 is a fragmentary side view showing a partial section of the vacuum cleaner of Figure 1; and

Figure 3 is a plan view of the section shown in Figure 2.

The drawings show a vacuum cleaner in which sucked-up dust may be collected in a dust chamber 1, above which a suction chamber 2 is removably provided. The suction chamber 2 has an air inlet 3 through which air is sucked via dust chamber 1. An electric motor 4 is located in a motor chamber 5, which is fixed in an air-tight manner to the suction chamber 2 by means of an air seal 6, such as an O-ring. Reference numerals 7, 7' designate upper and lower filter supports having a lattice structure, each of which is made up of a plurality of concentrically arranged rings and radially arranged spokes supporting the rings. The upper filter support 7 has a bearing section 8 at its centre, and the lower filter support 7' has an aperture 9. An air duct 10 communicates with the air inlet 3, the air duct 10 passing through peripheral portions of the filter supports 7, 7' so as to allow air sucked-in by operation of the motor 4 to pass into the dust chamber 1 and thence through one or more filter elements 11 into the suction chamber 2. The filter element(s) 11 is fixed by a bolt 12 between the filter supports 7 and 7'. In this way, the dust chamber 1 and the suction chamber 2 are partitioned from one another by the filter element or elements 11.

The bearing section 8 of the upper filter support 7 rotatably supports a hollow shaft 16, which itself radially supports a plurality of patting vanes 15. The patting vanes 15 are designed to remove dust entrained in secondary filter elements 14 suspended from an upper wall 13 of the suction chamber 2, the patting vanes 15 patting each of the secondary filter elements 14 on peripheral portions thereof as the shaft 16 rotates. The upper wall 13 has a number of recesses (not shown) corresponding to the number of the secondary filter elements 14, and each of the filter elements 14 is fixedly inserted in one of the recesses so that air sucked into the suction chamber 2 after filtration by the filter element(s) 11 is further filtered by the elements 14 before reaching the motor 4. In addition, one of the patting vanes 15 is provided with a patting arm 17 horizontally extending therefrom so as to pat the bottom portion of each suspended filter element 14 so as to allow dust entrained on the filter elements 14 to fall off.

The patting vanes 15 are rotated in the following way. One of the patting vanes 15 is provided with a small pipe or tube 18 through which there is passed a string 19 having a gripping ball 20 at each end thereof. The operator holds the grip balls 20 with both his hands and pulls the string 19 with the two balls alternately, thereby causing the hollow shaft 16 to rotate on the bearing section 8 alternately in clockwise and anti-clockwise directions.

Reference numeral 21 designates a float for indicating a liquid level if water, waste oil or any other liquid is sucked into the dust chamber 1. Detailed description of the structure and function of the float 21 will be omitted for simplicity.

As will be evident from the foregoing description, the above-described vacuum cleaner is provided with a first filter unit (11) and a secondary filter unit, filter elements (14) of the secondary unit being subjected to vibration by the patting vanes 15 and the patting arm 17, as desired to thereby help dust and dirt entrained thereon to fall off. Thus, the filter elements 14 are kept free from an undesirable build-up of dust or at least any such build-up is minimised. This ensures a uniform filtering efficiency of the secondary filter unit or at least minimises deterioration of such efficiency.

The first filter unit (11) generally has relatively large meshes whereas the secondary filter unit (elements 14) conveniently has relatively small meshes. Owing to the dual filter system, sucked-up dust and dirt are sieved twice, thereby ensuring that impurities are prevented from entering the motor housing or at least the possibility of their doing so is reduced.

### Claim

A vacuum cleaner comprising a dust chamber (1) for collecting sucked-up dust, dirt and/or moisture; a suction chamber (2) located above the dust chamber (1); the suction chamber (2) including an air inlet (3) through which, in use, external air is sucked in under reduced pressure via the dust chamber (1); means for causing a suction pressure in the suction chamber (2); at least one first filter element (11) located between the dust chamber (1) and the suction chamber (2); a plurality of secondary filter elements (14) suspended from an upper wall (13) of the suction chamber (2), the secondary filter elements (14) being radially arranged around a rotary shaft (16) supported axially of the suction chamber (2); patting means fixed to the rotary shaft (16) for causing dust and dirt entrained in the secondary filter elements (14) to fall off by vibration said patting means comprising a single patting arm (17); and driving means for rotating the rotary shaft (16) alternatively in clockwise and anti-clockwise directions; characterised in that the patting means comprises a plurality of vanes (15) fixed to the rotary shaft (16) and the single patting arm (17) extending horizontally therefrom; and the driving means comprises a tube (18) on one of the patting vanes (15) and a string (19) passing through the tube (18), the string including a grip ball (20) at each end thereof and passing around the patting vanes (15).

### Patentanspruch

Staubsauger mit einer Staubkammer (1) zum Sammeln des aufgesaugten Staubes, Schmutzes und/oder Feuchtigkeit; einer Saugkammer (2), die über der Staubkammer (1) angeordnet ist; wobei die Saugkammer (2) einen Lufteinlaß (3) hat, durch welchen bei der Benutzung Außenluft unter reduziertem Druck über die Staubkammer (1) eingesaugt wird; Mitteln zur Schaffung eines Saugdruckes in der Saugkammer (2); mindestens einem ersten Filterelement (11), welches zwischen der Staubkammer (1) und der Saugkammer (2) angeordnet ist; einer Vielzahl von Sekundärfilterelementen (14), die an einer oberen Wand (13) der Saugkammer (2) aufgehängt sind, wobei die Sekundärfilterelemente (14) radial um eine Drehwelle (16) herum angeordnet sind, welche axial zur Saugkammer (2) gelagert ist; Klopfmitteln, die an der Drehwelle (16) befestigt sind, um Staub und Schmutz, welche in den Sekundärfilterelementen (14) mitgenommen sind, zu veranlassen, durch Vibration abzufallen, wobei die Klopfmittel einen einzigen Klopfarm (17) aufweisen; und Antriebsmitteln zum Drehen der Drehwelle (16) abwechselnd in Uhrzeigersinn und in Gegenuhrzeigersinn; dadurch gekennzeichnet, daß das Klopfmittel eine Mehrzahl von Schaufeln (15) aufweist, die an der Drehwelle (16) befestigt sind, und der einzelne Klopfarm (17) sich horizontal von dieser erstreckt; und das Antriebsmittel ein Rohr (18) auf einer der Klopfschaufeln (15) und einen Faden (19) aufweist, welcher durch das Rohr (18) hindurchgeht, wobei der Faden einen Greifball (20) an jedem Ende aufweist und um die Klopfschaufeln (15) herumläuft.

### Revendication

Aspirateur comprenant une chambre à poussières (1) pour recueillir les poussières, les saletés et/ou l'humidité aspirées; une chambre d'aspiration (2) située au-dessus de la chambre à poussières (1); la chambre d'aspiration (2) présentant une entrée d'air (3) à travers laquelle, en service, de l'air extérieur est aspiré sous pression réduite à travers la chambre à poussières (1); un moyen pour établir une dépression dans la chambre d'aspiration (2); et au moins un premier élément filtrant (11) placé entre la chambre à poussières (1) et la chambre d'aspiration (2); une série d'éléments filtrants secondaires (14) suspendus à la paroi supérieure (13) de la chambre d'aspiration (2), les éléments filtrants secondaires (14) étant disposés radialement autour d'un arbre (16) supporté suivant l'axe de la chambre d'aspiration (2); un moyen de tapotement fixé à l'arbre (16) pour provoquer par vibration la chute des saletés et poussières entraînées dans les éléments filtrants secondaires (14); ledit moyen de tapotement étant constitué par un seul bras de tapotement (17); et un moyen moteur pour entraîner l'arbre (16) en rotation alternativement dans les sens horaire et anti-horaire; caractérisé en ce que le moyen de tapotement comprend une série de pales (15) fixées à l'arbre (16) et le bras de tapotement unique (17) en partant horizontalement; et le moyen moteur est constitué par un tube (18) porté par l'une des pales de tapotement (15) et par un cordon (19) traversant le tube (18), le cordon portant une boule de préhension (20) à chacune de ses extrémités et contournant les pales de tapotement (15).

FIG. I

FIG.2

FIG.3